# EUROPÄISCHE PATENTSCHRIFT

(11) **EP 1 004 392 B1**
(45) Veröffentlichungstag und Bekanntmachung des Hinweises auf die Patenterteilung: **07.04.2004**
(21) Anmeldenummer: 99122844.6
(22) Anmeldetag: 17.11.1999
(51) Int. Cl.: B23Q 1/28, B23Q 1/52, B25H 1/18

(54) **Schwenktisch einer Werkzeugmaschine**
Tilting table for a machine tool
Table basculante pour une machine-outil

(30) Priorität: 27.11.1998 DE 19854745
(43) Veröffentlichungstag der Anmeldung: 31.05.2000
(73) Patentinhaber: Union Werkzeugmaschinen GmbH Chemnitz, 09116 Chemnitz (DE)
(72) Erfinder: Bräuer, Dieter, 09125 Chemnitz (DE); Lehmann, Frank, 09112 Chemnitz (DE); Müller, Lutz, 09116 Chemnitz (DE)
(74) Vertreter: Seerig & Hübner

(56) Entgegenhaltungen:
- EP-A- 0 100 729
- PATENT ABSTRACTS OF JAPAN vol. 015, no. 053 (M-1079), 7. Februar 1991 (1991-02-07) & JP 02 284839 A (TOSHIBA CORP), 22. November 1990 (1990-11-22)

## Beschreibung

Die Erfindung betrifft einen Schwenktisch einer Werkzeugmaschine, bestehend aus einem Grundgestell auf dem seitlich eine Spannplatte mit Rippenteil schwenkbar angeordnet ist, deren Schwenkeinheit unterhalb der Spannplatte angeordnet ist.

Aus der DE 2813 656 ist ein Schwenktisch einer Werkzeugmaschine mit einer parallel zur Spannplatte liegenden Schwenkachse bekannt. Die Schwenkbewegung wird durch eine Schwenkeinrichtung bewirkt, die in einem Grundgestell unterhalb der Spannplatte angeordnet ist wobei die Spannplatte mittels Lagerbolzen an einer Seite des Grundgestelles angelenkt ist. Dieser Schwenktisch dient zur Bearbeitung eines Werkstückes, das in horizontaler Lage auf der Spannplatte aufgespannt wird und in einer mehr oder weniger geschwenkten Lage bearbeitet werden soll. Die DE 4012 999 C2 zeigt einen Schwenktisch mit verstellbarer Neigung für eine Werkzeugmaschine. Dieser Schwenktisch kann den eigentlichen Arbeitstisch einer Werkzeugmaschine darstellen, oder er kann auf einen vorhandenen, in der Neigung nicht verstellbaren Arbeitstisch einer Werkzeugmaschine aufgesetzt werden. Die Einstellbarkeit der Tischneigung erfolgt durch Nocken. Der Höhenunterschied der Tischneigung wird durch den kleinsten und größten Durchmesser des Nockens begrenzt. Um die Tischneigung zu vergrößern, ist am Arbeitstisch ein Abstandsglied angeordnet, das zwischen Nocken und daran anliegendem Tischteil einführbar ist. Beide Erfindungen haben den Nachteil, daß keiner der Schwenktische Werkstücke großer Masse, beispielsweise fünf Tonnen, auf der Spannplatte in eine waagerechte und in eine senkrechte Lage bei hoher Wiederholgenauigkeit schwenken kann.

Aufgabe der Erfindung ist es, einen Schwenktisch einer Werkzeugmaschine, bestehend aus einem Grundgestell auf dem seitlich eine Spannplatte mit Rippenteil schwenkbar angelenkt ist, deren Schwenkeinrichtung unterhalb der Spannplatte angeordnet ist, zu entwickeln, der Werkstücke großer Masse, beispielsweise fünf Tonnen, zwecks Bearbeitung auf der Spannplatte bei hoher Wiederholgenauigkeit in eine waagerechte und in eine senkrechte Lage schwenken kann.

Erfindungsgemäß wird die Aufgabe dadurch gelöst, daß die Spannplatte mittels Lagerbolzen an einer Seite des Grundgestelles angelenkt ist, daß im Grundgestell ein Getriebemotor befestigt ist, dessen Motorwelle, die parallel zur Schwenkachse angeordnet ist, beidseitig mit je einem Ritzel versehen ist, jedes der Ritzel mit je einem am Rippenteil der Spannplatte befestigten Zahnradsegment in Wirkverbindung steht, parallel gegenüberliegend von den beiden Zahnradsegmenten am anderen Ende je ein Haltebügel an einer Gegenfläche am Rippenteil der Spannplatte befestigt ist, für jeden der Haltebügel im Grundgestell eine Ausnehmung vorhanden ist, am Grundgestell ein Auflageklotz für die Gegenfläche befestigt ist, daß jedes Zahnradsegment am gesamten Umfang einen Kranz aufweist, im Grundgestell Paare von Anlagebacken angeordnet sind, die sich hinter den Kranz der Zahnradsegmente erstrecken und bewegliche, aber unverlierbare Druckstücke in Form von Kreisabschnitten, die Druckstücke der paarigen Anlagebacken mit beiden Kränzen der Zahnradsegmente in Wirkverbindung stehen, wobei im Grundgestell zwei Hydraulikzylinder angeordnet sind, die parallel zur Getriebemotorachsrichtung je einen Keil mit zylindrischem Rücken zwischen Grundgestell und Kranz; der eine entsprechend geneigte Außenfläche aufweist, bewegen, und, daß zwei weitere Hydraulikzylinder im Grundgestell parallel zu den Hydraulikzylindern angeordnet sind, die je einen Keil mit zylindrischem Rücken zwischen Grundgestell und in den in die Ausnehmungen des Grundgestelles eingefahrenen Haltebügeln, die entsprechend geneigte Flächen aufweisen, bewegen.

Nachfolgend wird die Erfindung anhand eines Ausführungsbeispieles näher erläutert. Die dazugehörige Zeichnung zeigt in
- Figur 1:: eine schematische Darstellung eines Schwenktisches in waagerechter Lage als Seitenansicht,
- Figur 2:: Schnitt B-B nach Figur 1,
- Figur 3:: den Schwenktisch nach Figur 1 in senkrechter Lage und
- Figur 4:: Schnitt A-A nach Figur 3.

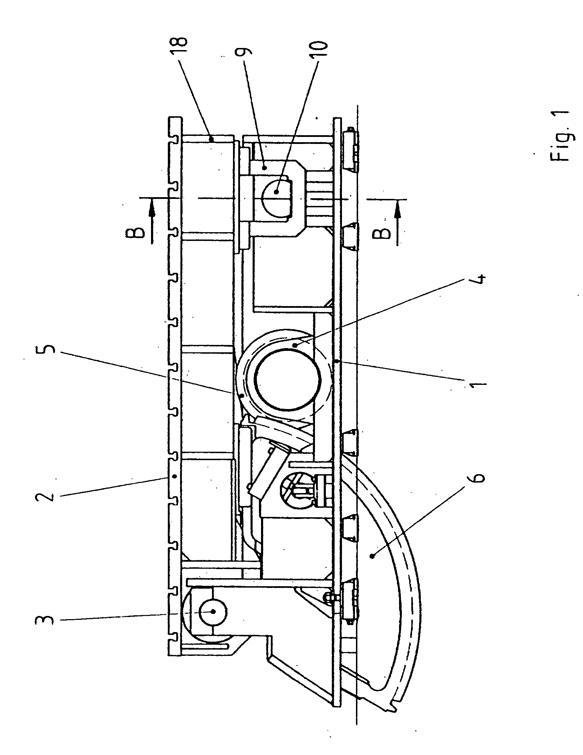

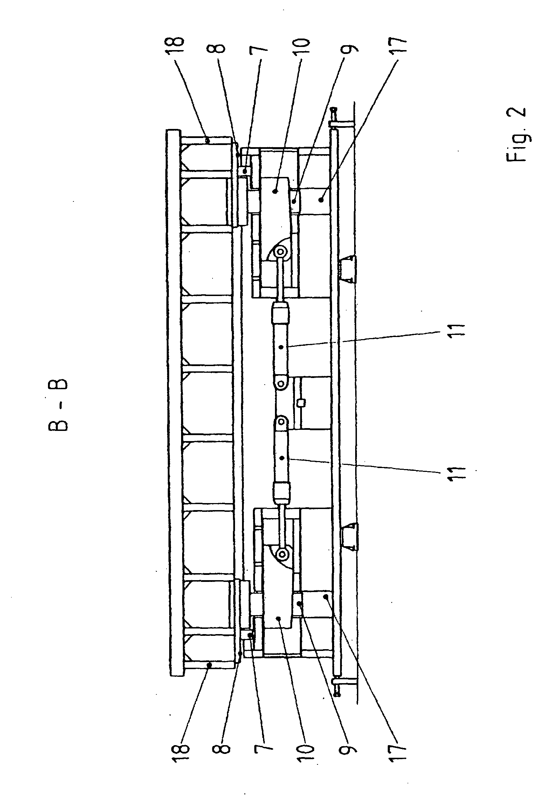

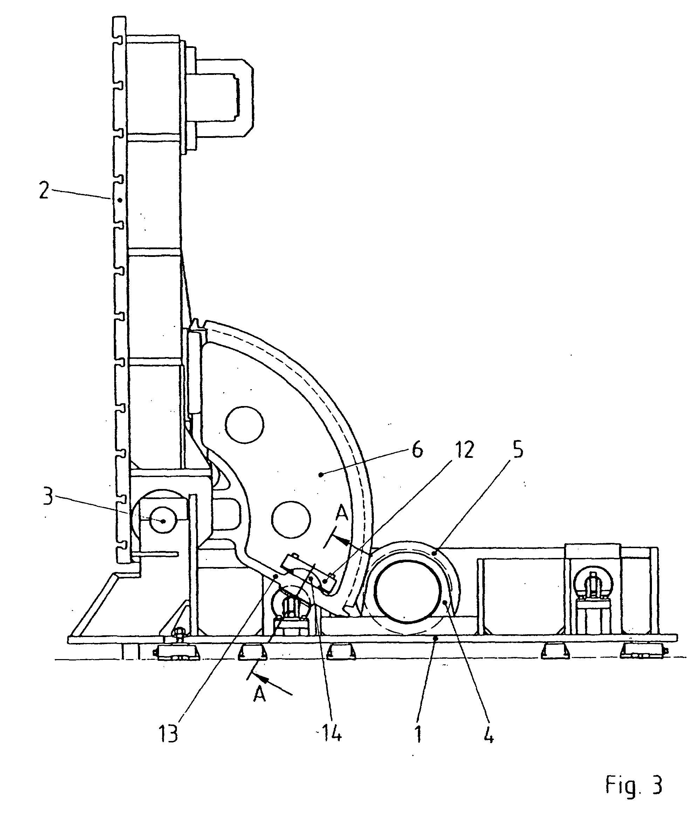

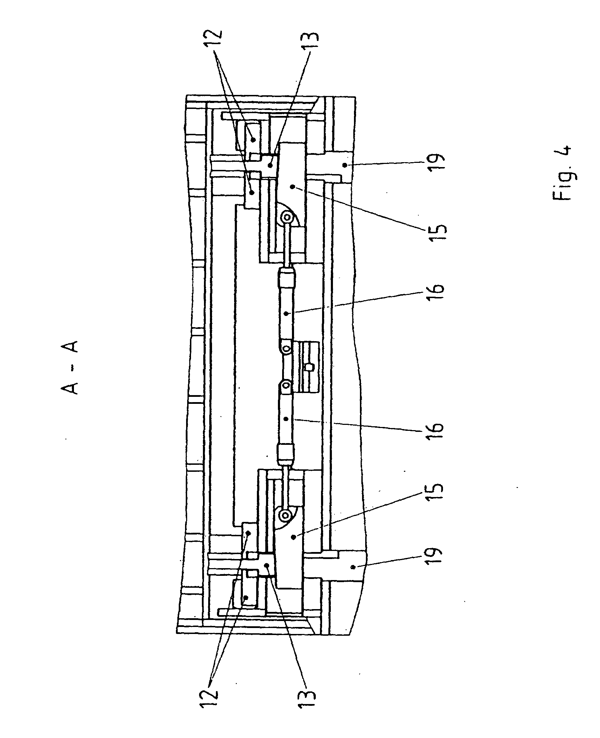

Eine Spannplatte 2 mit Rippenteil 18 kann zwei fixe Stellungen, eine waagerechte in Figur 1 und eine senkrechte in Figur 3, einnehmen, wobei durch eine entsprechende Arretierung eine hohe Wiederholbarkeit erzielt wird und die Bearbeitungskräfte aufgenommen werden. Figur 1 zeigt ein Grundgestell 1 in dem ein Getriebemotor 4 mit zwei Ritzeln 5 angeordnet ist. Die Ritzel 5 wirken zusammen mit zwei Zahnradsegmenten 6, die mit einem Rippenteil 18 einer Spannplatte 2 fest verbunden sind. Durch Drehung der Ritzel 5 wird über die Zahnradsegmente 6 die Spannplatte 2 von der waagerechten in die senkrechte Stellung und zurück gebracht. Wie aus Figur 2 zu erkennen, sind am Grundgestell 1 zwei Auflageklötze 7 befestigt, auf denen die Spannplatte 2 mit ihrem Rippenteil 18 und einer daran befestigten Gegenfläche 8 aufliegt. An der Gegenfläche 8 befinden sich gegenüberliegend von den Zahnradsegmenten 6 je ein Haltebügel 9, die in entsprechende Ausnehmungen 17 des Grundgestelles 1 eingreifen. Mit den Haltebügeln 9 in Wirkverbindung stehen Keile 10, die von Hydraulikzylindern 11 bewegt werden. Die Keile 10 weisen einen zylindrischen Rücken auf und bekommen dadurch mit ihrer Keilfläche einen guten Kontakt zur entsprechend geneigten Gegenfläche am Haltebügel 9.
Soll die Spannplatte 2 aus der waagerechten in die senkrechte Position gebracht werden, werden die Keile 10 durch die Hydraulikzylinder 11 so weit in das Grundgestell 1 zurückgezogen, bis sich die Spannplatte 2 mit den Haltebügeln 9 frei nach oben bewegen kann. Die Arretierung der Spannplatte 2 in der senkrechten Stellung zeigen Figur 3 und 4. Das Zahnradsegment 6 ist am gesamten Umfang kranzförmig verbreitert. Im Grundgestell 1 sind Paare von Anlagebacken 12 befestigt, die sich bis hinter den Kranz 13 der Zahnradsegmente 6 erstrecken. Die Anlagebacken 12 tragen bewegliche, aber unverlierbare Druckstücke 14 in Form von Kreisabschnitten, wie Figur 3 zeigt. Die Druckstücke 14 gleichen durch ihren zylindrischen Rücken Winkeldifferenzen aus. Sie kommen zur Anlage an entsprechenden Gegenflächen am Kranz 13 der Zahnradsegmente 6. Gegenüber von den Anlagebacken 12 mit den Druckstücken 14 befinden sich zwei weitere Keile 15 mit zylindrischem Rücken, bewegt von zwei weiteren Hydraulikzylindern 16 im Grundgestell 1. Am Kranz 13 der Zahnradsegmente 6 ist die Außenfläche entsprechend geneigt. Durch den zylindrischen Rücken bekommen die Keile 15 einen guten Kontakt zur jeweiligen Gegenfläche an den Kränzen 13. Soll die Spannplatte 2 zurück in die waagerechte Stellung gebracht werden, müssen die Keile 15 mit Hydraulikzylinder 16 soweit zurückgezogen werden, daß die Kränze 13 vorbei bewegt werden können. Dabei taucht ein Teil der Zahnradsegmente 6 in einen Durchlaß 19 des Maschinenfundamentes ein.

### Aufstellung der verwendeten Bezugszeichen

- 1 =: Grundgestell
- 2 =: Spannplatte
- 3 =: Lagerbolzen
- 4 =: Getriebemotor
- 5 =: Ritzel
- 6 =: Zahnradsegment
- 7 =: Auflageklotz
- 8 =: Gegenfläche
- 9 =: Haltebügel
- 10 =: Keil
- 11 =: Hydraulikzylinder
- 12 =: Anlagebacken
- 13 =: Kranz
- 14 =: Druckstück
- 15 =: Keil
- 16 =: Hydraulikzylinder
- 17 =: Ausnehmung
- 18 =: Rippenteil
- 19 =: Durchlaß

## Patentansprüche

1. Schwenktisch einer Werkzeugmaschine, bestehend aus einem Grundgestell (1) auf dem seitlich eine Spannplatte (2) mit Rippenteil (18) schwenkbar angelenkt ist, deren Schwenkeinrichtung unterhalb der Spannplatte (2) angeordnet ist, wobei die Spannplatte (2) mittels Lagerbolzen (3) an einer Seite des Grundgestelles (1) angelenkt ist, **dadurch gekennzeichnet, daß** im Grundgestell (1) ein Getriebemotor (4) befestigt ist, dessen Motorwelle, die parallel zur Schwenkachse angeordnet ist, beidseitig mit je einem Ritzel (5) versehen ist, jedes der Ritzel (5) mit je einem am Rippenteil (18) der Spannplatte (2) befestigten Zahnradsegment (6) in Wirkverbindung steht, parallel gegenüberliegend von den beiden Zahnradsegmenten (6) am anderen Ende je ein Haltebügel (9) an einer Gegenfläche (8) am Rippenteil (18) der Spannplatte (2) befestigt ist, für jeden der Haltebügel (9) im Grundgestell (1) eine Ausnehmung (17) vorhanden ist, am Grundgestell (1) ein Auflageklotz (7) für die Gegenfläche (8) befestigt ist, daß jedes Zahnradsegment (6) am gesamten Umfang einen Kranz (13) aufweist, im Grundgestell (1) Paare von Anlagebacken (12) angeordnet sind, die sich hinter den Kranz (13) der Zahnradsegmente (6) erstrecken und bewegliche, aber unverlierbare Druckstücke (14) in Form von Kreisabschnitten, die Druckstücke (14) der paarigen Anlagebacken (12) mit beiden Kränzen (13) der Zahnradsegmente (6) in Wirkverbindung stehen, wobei im Grundgestell (1) zwei Hydraulikzylinder (11) angeordnet sind, die parallel zur Getriebemotorachsrichtung je einen Keil (10) mit zylindrischem Rücken zwischen Grundgestell (1) und Kranz (13), der eine entsprechend geneigte Außenfläche aufweist, bewegen, und, daß zwei weitere Hydraulikzylinder (16) im Grundgestell (1) parallel zu den Hydraulikzylindern (11) angeordnet sind, die je einen Keil (15) mit zylindrischem Rücken zwischen Grundgestell (1) und in den in die Ausnehmungen (17) des Grundgestelles (1) eingefahrenen Haltebügeln (9), die entsprechend geneigte Flächen aufweisen, bewegen.

## Claims

1. Swivel table of a machine tool, consisting of a base frame (1), to which a clamping plate (2) with ribbed part (18) is laterally coupled in a swivellable manner, the swivel device of this clamping plate (2) being arranged below the clamping plate (2), the clamping plate (2) being coupled to one side of the base frame (1) by means of bearing pins (3), **characterized in that** a geared motor (4) is fastened in the base frame (1) and its motor shaft, which is arranged parallel to the swivel axis, is provided on both sides with a respective pinion (5), each of the pinions (5) is in operative connection with a respective gear segment (6) fastened to the ribbed part (18) of the clamping plate (2), respective retaining stirrups (9) are fastened in parallel at the other end opposite the two gear segments (6) to a mating surface (8) on the ribbed part (18) of the clamping plate (2), pairs of bearing cheeks (12) are arranged for each of the retaining stirrups (9) in the base frame (1), which bearing cheeks (12) extend behind the rim (13) of the gear segments (6) and movable, but captive, pressure pieces (14) in the form of circle segments, the pressure pieces (14) of the paired bearing cheeks (12) are in operative connection with both rims (13) of the gear segments (6), two hydraulic cylinders (11) being arranged in the base frame (1), which hydraulic cylinders (11), parallel to the geared-motor axis direction, move a respective wedge (10) with cylindrical backs between base frame (1) and rim (13), which has a correspondingly inclined outer surface, and **in that** two further hydraulic cylinders (16) are arranged in the base frame (1) parallel to the hydraulic cylinders (11), which hydraulic cylinders (16) move a respective wedge (15) with cylindrical back between base frame (1) and the retaining stirrups (9), which are driven into the recesses (17) of the base frame (1) and have correspondingly inclined surfaces.

## Revendications

1. Table basculante pour une machine-outil, se composant d'un bâti (1), sur lequel est articulée latéralement et de manière pivotante une plaque de serrage (2) avec une partie nervurée (18), dont le dispositif de pivotement est disposé en dessous de la plaque de serrage (2), la plaque de serrage (2) étant articulée au moyen de boulons à coussinet (3) d'un côté du bâti (1), **caractérisée en ce qu'**un moto-réducteur (4) est fixé dans le bâti (1), dont l'arbre de moteur, qui est disposé parallèlement à l'axe de pivotement, est pourvu des deux côtés d'un pignon (5), chacun des pignons (5) est en liaison coopérante avec un segment de roue dentée (6) respectif fixé sur la partie nervurée (18) de la plaque de serrage (2), parallèlement en regard des deux segments de roue dentée (6) à l'autre extrémité, une bride de fixation (9) est fixée respectivement au niveau d'une face conjuguée (8) sur la partie nervurée (18) de la plaque de serrage (2), pour chacune des brides de fixation (9) sont prévues dans le bâti (1) des paires de mâchoires d'installation (12) qui s'étendent derrière la couronne (13) des segments de roue dentée (6) et des éléments de pression (14) mobiles mais imperdables en forme de portions de cercle, les éléments de pression (14) des mâchoires d'installation appariées (12) sont en liaison coopérante avec deux couronnes (13) des segments de roue dentée (6), deux vérins hydrauliques (11) étant disposés dans le bâti (1), lesquels déplacent parallèlement à la direction de l'axe du moto-réducteur une clavette (10) respective avec des dos cylindriques entre le bâti (1) et la couronne (13), qui présente une surface extérieure inclinée de manière correspondante et **en ce que** deux autres vérins hydrauliques (16) dans le bâti (1) sont disposés parallèlement aux vérins hydrauliques (11) qui déplacent à chaque fois une clavette (15) avec un dos cylindrique entre le bâti (1) et les brides de fixation (9) enfoncées dans les évidements (17) du bâti (1), qui présentent les surfaces inclinées correspondantes.
